# FASCICULE DE BREVET EUROPEEN

(11) **EP 3 077 262 B1**
(45) Date de publication et mention de la délivrance du brevet: **16.06.2021**
(21) Numéro de dépôt: 14821747.4
(22) Date de dépôt: 28.11.2014
(51) Int. Cl.: B60W 50/14

(54) **PROCÉDÉ DE CONTRÔLE DE LA TRANSMISSION DE COUPLE DANS UN VÉHICULE EN FONCTION DE LA PENTE**
VERFAHREN ZUR STEUERUNG DER ÜBERTRAGUNG VON DREHMOMENTEN BEI EINEM FAHRZEUG JE NACH STEIGUNG
METHOD FOR CONTROLLING THE TRANSMISSION OF TORQUE IN A VEHICLE DEPENDING ON THE SLOPE

(30) Priorité: 02.12.2013 FR 1361935
(43) Date de publication de la demande: 12.10.2016
(73) Titulaire: PSA Automobiles SA, 78300 Poissy (FR)
(72) Inventeur: DESCHAMPS, Vincent, F-92130 Issy les Moulineaux (FR)
(86) Numéro de dépôt international: PCT/FR2014/053076
(87) Numéro de publication internationale: WO 2015/082810

(56) Documents cités:
- EP-A2- 2 460 708
- DE-A1-102008 023 135
- DE-A1-102010 030 346
- DE-A1-102011 109 039

## Description

L'invention concerne les véhicules qui comprennent au moins un moteur thermique pouvant transmettre du couple, et plus précisément le contrôle de la transmission de ce couple.

Comme le sait l'homme de l'art, si l'on ne considère pas les pertes intrinsèques du moteur thermique d'un véhicule (essentiellement les frottements et le pompage), le rendement de ce moteur thermique est relativement constant. Par conséquent, la consommation en carburant du moteur thermique sert sensiblement à produire l'énergie mécanique qui est effectivement transmise, par exemple aux roues, lorsque la chaîne de transmission est fermée, et l'énergie qui est nécessaire pour compenser les frottements et le pompage. Cette somme d'énergies produites correspond à ce que l'on appelle fréquemment des efforts résistants auxquels correspond un couple résistant Cres.

Etant donné que ce couple résistant Cres est sensiblement constant (bien que croissant avec le régime moteur), l'énergie perdue sur une période de temps T à cause des efforts résistants est égale à Cres*regime_moteur*T. Par conséquent, lorsque l'on veut rouler sur une voie de circulation sensiblement plate à une vitesse moyenne, par exemple égale à 110km/h, et que le régime moteur correspondant, compte-tenu du rapport de boîte engagé, est par exemple de l'ordre de 2000 tr/min, il est plus efficace d'alterner des phases de décélération de 120 km/h à 100 km/h en roue libre (avec le régime moteur en soutien de ralenti, par exemple à 750 tr/min), puis de refermer la chaîne de traction et d'accélérer de 100 km/h à 120 km/h, plutôt que de maintenir le véhicule à une vitesse constante de 110km/h.

En effet, le bilan énergétique montre qu'avec ce type de conduite en « accordéon » (ou « puise & glide »), la puissance mécanique globale générée par le moteur thermique et transmise aux roues est sensiblement la même, mais qu'en revanche l'énergie consommée pour vaincre le couple résistant Cres est inférieure à l'énergie devant être consommée pour maintenir une vitesse constante, du fait du temps passé en régime moteur de ralenti.

L'inconvénient principal de ce type de conduite (automatique ou non), contrôlé par un système de contrôle de vitesse de type régulateur de vitesse, réside dans l'alternance des accélérations et décélérations qui est fréquemment mal supportée par certains passagers d'un véhicule.

Pour rendre plus supportable cette alternance des compromis peuvent être effectués. Ainsi, on peut augmenter les vitesses limites basse et haute afin de diminuer la fréquence d'alternance des accélérations et décélérations, mais cela induit des variations trop importantes de la vitesse véhicule, qui peuvent gêner les conducteurs des véhicules environnants, et une diminution de la vitesse moyenne (lorsque l'on se donne comme objectif de ne pas dépasser la vitesse limite). On peut également augmenter l'amplitude de l'accélération afin d'améliorer le gain en consommation (du fait que le véhicule reste moins longtemps à « haut » régime), mais cela induit un moindre confort en termes de dynamique longitudinale.

L'invention a donc notamment pour but d'améliorer la situation, en particulier, mais non limitativement, lorsque le véhicule est équipé d'un système de contrôle de vitesse à consigne de vitesse programmable (limiteur et/ou régulateur de vitesse).

Elle propose notamment à cet effet un procédé conforme au préambule des revendications indépendantes 1 et 2 reprenant l'enseignement du document DE102010030346.

L'invention est caractérisée par la partie caractérisante des revendications indépendantes 1 et 2.

On peut ainsi contrôler la dynamique longitudinale du véhicule dans certaines circonstances de pente tout en réduisant sa consommation à l'usage, sans que cela ne constitue une gêne pour ses passagers.

Le procédé de contrôle selon l'invention peut comporter d'autres caractéristiques qui peuvent être prises séparément ou en combinaison, et notamment :
- la durée seuil peut être fonction au moins de la vitesse sensiblement constante ;
- la vitesse minimale peut être fonction au moins de la vitesse sensiblement constante ;
- en variante ou en complément, dans la deuxième étape , en cas d'accélération du véhicule pendant l'arrêt de transmission de couple, après la durée seuil et avant d'atteindre la vitesse minimale, on peut autoriser immédiatement la transmission de couple, afin que le véhicule puisse regagner la vitesse sensiblement constante, lorsque la pente de la voie de circulation empruntée est comprise dans un intervalle de valeurs choisi dans lequel une première quantité de carburant devant être utilisée pour maintenir un moteur du véhicule en soutien d'un ralenti est strictement supérieure à une seconde quantité de carburant devant alimenter le moteur pour maintenir la vitesse du véhicule en cas de rétablissement de la transmission de couple ;
- la vitesse sensiblement constante peut être égale à une vitesse de consigne programmée par un usager du véhicule dans un système de contrôle de vitesse à consigne de vitesse programmable que comprend le véhicule ;
   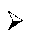 dans la deuxième étape, lorsque la vitesse de consigne programmée est une vitesse de limitation, on peut générer dans le véhicule, à destination de l'usager, au moins un message destiné à lui proposer de relâcher une pression exercée sur une pédale d'accélérateur, et on peut déclencher l'arrêt de transmission de couple si l'usager à relâché la pression exercée sur la pédale d'accélérateur, puis lorsque la vitesse du véhicule devient égale à la vitesse minimale on peut générer dans le véhicule, à destination de l'usager, au moins un autre message destiné à lui proposer d'augmenter la pression exercée sur la pédale d'accélérateur, et on peut autoriser la transmission de couple afin que le véhicule puisse regagner la vitesse sensiblement constante lorsque l'usager a augmenté la pression exercée sur la pédale d'accélérateur.

D'autres caractéristiques et avantages de l'invention apparaîtront à l'examen de la description détaillée ci-après, et des dessins annexés, sur lesquels:
- la figure 1 illustre schématiquement et fonctionnellement un véhicule comprenant une chaîne de transmission et un superviseur de chaîne comprenant un dispositif de contrôle selon l'invention, et
- la figure 2 illustre au sein d'un diagramme des première (C1) et seconde (C2) courbes d'évolution temporelle de la vitesse d'un véhicule en présence d'un contrôle de transmission de couple assuré par un procédé selon l'invention respectivement en l'absence et en présence d'une ré-accélération.

L'invention a pour but de proposer un procédé de contrôle destiné à permettre le contrôle de la transmission du couple qui est produit par un moteur d'une chaîne de transmission, à système d'embrayage et de débrayage automatique, d'un véhicule V.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule terrestre disposant d'une chaîne de transmission (ou groupe motopropulseur) à système d'embrayage et de débrayage automatique.

Par ailleurs, on considère dans ce qui suit, à titre d'exemple non limitatif, que le véhicule V comprend une chaîne de transmission de type conventionnel, c'est-à-dire ne comportant comme source de couple qu'un moteur thermique MT. Mais ce véhicule pourrait comprend une chaîne de transmission de type hybride, c'est-à-dire comportant au moins un moteur thermique et au moins un moteur (ou une machine) auxiliaire capable de fournir du couple à partir de l'énergie qui est stockée dans des moyens de stockage d'énergie (comme par exemple un moteur électrique ou à air comprimé).

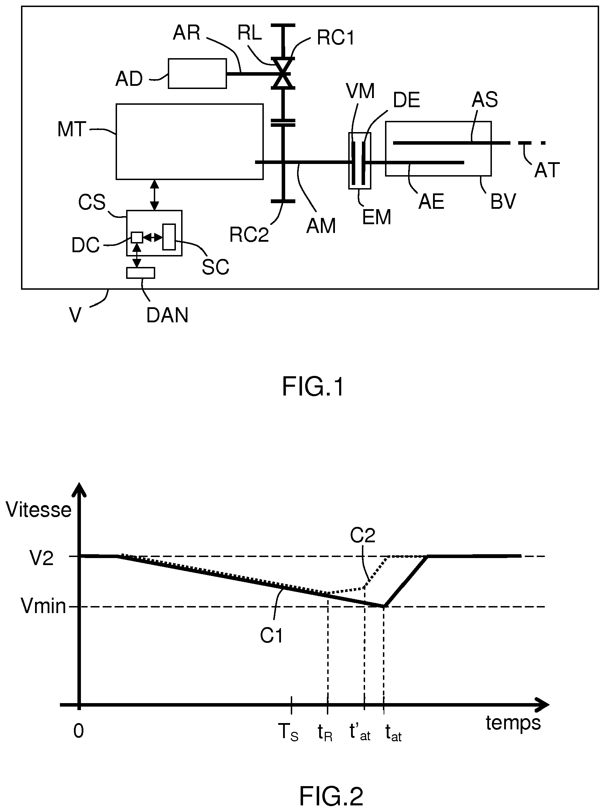

On a schématiquement représenté sur la figure 1 un véhicule V comprenant une chaîne de transmission, un superviseur de chaîne CS propre à superviser le fonctionnement de la chaîne de transmission, et un dispositif de contrôle DC selon l'invention.

La chaîne de transmission (ou groupe motopropulseur) comprend notamment, ici, un moteur thermique MT, un arbre moteur AM, une boite de vitesses BV et un embrayage principal EM.

Le moteur thermique MT comprend un vilebrequin (non représenté) qui est solidarisé fixement à l'arbre moteur AM afin d'entraîner ce dernier (AM) en rotation.

La boîte de vitesses BV comprend au moins un arbre d'entrée (ou primaire) AE et un arbre de sortie AS destinés à être couplés l'un à l'autre. L'arbre d'entrée AE est destiné à recevoir le couple moteur via l'embrayage principal EM. L'arbre de sortie AS est destiné à recevoir le couple moteur via l'arbre d'entrée AE afin de le communiquer à l'arbre de transmission AT auquel il est couplé et qui est couplé indirectement aux roues du véhicule V. On notera que la boîte de vitesses BV peut être robotisée ou non. Par conséquent, il peut s'agir d'une boîte automatique, d'une boîte de vitesses manuelle pilotée, d'une boîte de vitesses manuelle à embrayage dit « by-wire », ou d'une boîte de vitesses à double embrayage (ou DCT).

L'embrayage EM comprend notamment, ici, un volant moteur VM qui est solidarisé fixement à l'arbre moteur AM et un disque d'embrayage DE qui est solidarisé fixement à l'arbre d'entrée AE.

On notera que dans l'exemple non limitatif illustré sur la figure 1, la chaîne de transmission comprend également une machine électrique AD qui constitue, par exemple, un alterno-démarreur chargé notamment de lancer le moteur thermique MT afin de lui permettre de démarrer, y compris en présence d'un système de contrôle d'arrêt et de redémarrage automatique (ou « stop and start »). Cet alterno-démarreur AD est chargé d'entraîner en rotation un arbre de rotor (ou d'induit) AR qui est ici solidarisé à une roue libre RL destinée à être couplée sur ordre à un pignon ou une roue de couplage RC1 qui engrène de façon permanente un autre pignon ou une autre roue de couplage RC2 solidarisé(e) fixement à l'arbre moteur AM.

Les fonctionnements du moteur thermique MT et de l'alterno-démarreur AD sont contrôlés par le superviseur de chaîne CS qui peut se présenter sous la forme d'un calculateur (de préférence dédié).

Comme indiqué précédemment, l'invention propose de mettre en œuvre dans le véhicule V un procédé de contrôle destiné à permettre le contrôle de la transmission du couple qui est produit par le moteur (ici thermique) MT de la chaîne de transmission du véhicule V.

Un tel procédé peut être mis en oeuvre par le dispositif de contrôle DC. Dans l'exemple non limitatif illustré sur la figure 1, le dispositif de contrôle DC fait partie du superviseur de chaîne CS. Mais cela n'est pas obligatoire. Ce dispositif de contrôle DC pourrait en effet être un équipement qui est couplé au superviseur de chaîne CS, directement ou indirectement. Par conséquent, le dispositif de contrôle DC peut être réalisé sous la forme de modules logiciels (ou informatiques ou encore « software »), ou bien d'une combinaison de circuits électroniques (ou « hardware ») et de modules logiciels.

Le procédé de contrôle, selon l'invention, comprend deux étapes (i) et (ii).

L'étape (i) est initiée lorsque le véhicule V circule à une vitesse sensiblement constante V2. On notera que cette circulation à une vitesse sensiblement constante V2 résulte soit de l'action sur les pédales d'accélérateur et/ou de frein par l'usager, soit de la programmation par l'usager d'une consigne de vitesse d'un système de contrôle de vitesse SC du véhicule V fonctionnant en régulation de vitesse ou en limitation de vitesse.

Dans l'exemple non limitatif illustré sur la figure 1, le véhicule V comprend un système de contrôle de vitesse SC assurant au moins une fonction de régulation de vitesse, ainsi qu'éventuellement une fonction de limitation de vitesse. Il est rappelé qu'un tel système SC est notamment chargé, lorsqu'il est activé par le conducteur du véhicule V et qu'il a été programmé avec une consigne de vitesse, de déterminer pour la chaîne de transmission une accélération de consigne en fonction de cette consigne de vitesse et de la vitesse en cours du véhicule V. On comprendra que chaque accélération de consigne est déterminée de manière à faire tendre la vitesse en cours du véhicule V vers la consigne de vitesse qui a été programmée par le conducteur.

Dans l'exemple non limitatif illustré sur la figure 1, le système de contrôle de vitesse SC fait partie du superviseur de chaîne CS. Mais cela n'est pas obligatoire. Ce système (de contrôle de vitesse) SC pourrait en effet être un équipement, comme par exemple un calculateur dédié, qui est couplé au superviseur de chaîne CS, directement ou indirectement. Par conséquent, le système (de contrôle de vitesse) SC peut être réalisé sous la forme de modules logiciels (ou informatiques ou encore « software »), ou bien d'une combinaison de circuits électroniques (ou « hardware ») et de modules logiciels.

Il est par ailleurs rappelé que l'activation de la fonction de régulation ou limitation de vitesse requiert une action sur le levier (ou commodo) qui est associé à cette fonction (et qui est généralement couplé à la colonne de direction ou au volant du véhicule V), que la désactivation de la fonction de régulation de vitesse requiert une action sur le levier (ou commodo) précité ou un appui sur la pédale de frein, et que la désactivation de la fonction de limitation de vitesse requiert une action sur le levier (ou commodo) précité.

On notera que le dispositif de contrôle DC pourrait faire partie du système de contrôle de vitesse SC, par exemple dans le but d'offrir une fonction économique additionnelle.

L'étape (i) consiste à estimer (au moyen du dispositif de contrôle DC), lorsque le véhicule V circule à une vitesse sensiblement constante V2, une évolution temporelle de sa vitesse Vₑ(t), en l'absence de couple transmis, en fonction de données qui sont représentatives des pentes d'une voie de circulation que va emprunter ce véhicule V, puis à déterminer si la vitesse estimée Vₑ(Tₛ) au bout d'une durée seuil Tₛ sera supérieure à une vitesse minimale Vmin, strictement inférieure à la vitesse sensiblement constante V2. La condition à vérifier est donc Vmin < Vₑ(Tₛ) < V2. La durée seuil Tₛ débute au moment où l'on effectue l'estimation.

On notera que l'absence de couple transmis peut résulter soit d'un fonctionnement de la chaîne de transmission en mode roue libre avec le moteur tournant au ralenti (ou « free wheeling »), soit d'une ouverture de la chaîne de transmission avec le moteur coupé (ou « sailing »). La chaîne de transmission est dite « fermée » lorsque l'embrayage EM est en position embrayée et donc transmet du couple moteur à la boîte de vitesses BV, et dite « ouverte » lorsque l'embrayage EM est en position débrayée et donc ne transmet pas de couple moteur à la boîte de vitesses BV. Lorsque l'on est en sailing et que l'on veut de nouveau transmettre du couple aux roues, il faut d'abord redémarrer le moteur MT, puis fermer la chaîne de transmission.

Les données qui sont représentatives des pentes des voies de circulation sont par exemple fournies par un dispositif d'aide à la navigation DAN, éventuellement de type GPS, qui est embarqué dans le véhicule V et qui est couplé au dispositif de contrôle DC, par exemple via le bus d'un réseau de communication, éventuellement multiplexé, du véhicule V. De telles données topographiques définissent les pentes moyennes prises par au moins certaines portions connues d'au moins certaines voies de circulation connues. Ces données peuvent être soit stockées dans le dispositif d'aide à la navigation DAN, soit stockées dans un serveur de communication accessible par voie d'ondes via un réseau de communication non filaire.

On comprendra que l'objectif est ici d'estimer au moyen d'un modèle mathématique prédéfini comment va évoluer dans le temps la vitesse Vₑ(t) du véhicule V si on cesse de transmettre du couple (ici) à ses roues, compte tenu de la pente de la voie de circulation sur laquelle circule (ou s'apprête à circuler) ce véhicule V.

Un exemple non limitatif de première courbe C1 d'évolution temporelle de la vitesse estimée Vₑ(t) d'un véhicule en l'absence de couple transmis et dans une situation classique, c'est-à-dire sans ré-accélération, est illustré sur la figure 2 entre les instants 0 et t_{R}. On notera que dans cet exemple purement illustratif, après l'écoulement d'une durée seuil Tₛ sans couple transmis aux roues, la vitesse estimée Vₑ(t = Tₛ) du véhicule V est inférieure à la vitesse sensiblement constante V2 dudit véhicule V au moment de l'estimation, mais supérieure à la vitesse minimale Vmin. Par conséquent, la condition précitée (Vmin < Vₑ(Tₛ) < V2) est bien satisfaite.

On notera que la durée seuil Tₛ peut être avantageusement fonction au moins de la vitesse sensiblement constante V2. De même, la vitesse minimale Vmin peut être avantageusement fonction au moins de la vitesse sensiblement constante V2. A titre d'exemple non limitatif, lorsque la vitesse sensiblement constante V2 est égale à 90 km/h, la durée seuil Tₛ peut être égale à 20 secondes et la vitesse minimale Vmin peut être égale à 80 km/h. On notera que dans un mode de réalisation la durée seuil Tₛ et/ou la vitesse minimale Vmin peu(ven)t être programmée(s) par l'usager via une interface homme/machine embarquée dans le véhicule V, par exemple celle du combiné central qui est installé dans la planche de bord.

L'étape (ii), du procédé de contrôle, consiste à déclencher l'arrêt de transmission de couple lorsque la condition précitée (vitesse estimée Vₑ(Tₛ) au bout de la durée seuil Tₛ est supérieure à la vitesse minimale Vmin), puis à autoriser la transmission de couple lorsque la vitesse du véhicule V, en l'absence de couple transmis, devient égale à la vitesse minimale Vmin (après une nécessaire phase de décélération), afin que le véhicule V puisse regagner la vitesse sensiblement constante V2 qu'il possédait initialement.

C'est le dispositif de contrôle DC qui contrôle la réalisation de cette étape (ii).

On comprendra que lorsque la vitesse sensiblement constante V2 résultait de la programmation d'une consigne de vitesse du système de contrôle de vitesse SC fonctionnant en régulation de vitesse, c'est le système de contrôle de vitesse SC qui se charge de faire converger la vitesse du véhicule V (alors égale à Vmin) vers sa consigne de vitesse V2.

En revanche, lorsque la vitesse sensiblement constante V2 résultait de la programmation d'une consigne de vitesse du système de contrôle de vitesse SC fonctionnant en limitation de vitesse ou bien d'actions de l'usager sans activation du système de contrôle de vitesse SC, on génère dans l'étape (ii), dans le véhicule V, à destination de l'usager, au moins un premier message destiné à lui proposer de relâcher la pression qu'il exerce sur la pédale d'accélérateur, et on déclenche l'arrêt de transmission de couple si l'usager à relâché cette pression. Puis, lorsque la vitesse du véhicule V devient égale à la vitesse minimale Vmin, on génère dans le véhicule V, à destination de l'usager, au moins un autre (second) message destiné à lui proposer d'augmenter la pression exercée sur la pédale d'accélérateur, et on autorise la transmission de couple afin que le véhicule V puisse regagner la vitesse sensiblement constante V2 lorsque l'usager a augmenté la pression exercée sur la pédale d'accélérateur.

Si l'usager ne relâche pas la pression exercée sur la pédale d'accélérateur après le premier message généré, le dispositif de contrôle DC ne déclenche pas l'arrêt de transmission de couple. Par ailleurs, si l'usager n'augmente pas la pression exercée sur la pédale d'accélérateur après le second message généré, le dispositif de contrôle DC peut soit ré-autoriser la transmission de couple en ordonnant la fermeture de la chaîne de transmission, soit attendre que l'usager ré-appuie sur la pédale d'accélérateur avant de ré-autoriser la transmission de couple en ordonnant la fermeture de la chaîne de transmission.

Chaque premier ou second message peut, par exemple, être un message textuel qui est affiché sur un écran d'affichage du véhicule V (par exemple celui du combiné central implanté dans la planche de bord) et/ou un message audio de synthèse qui est diffusé par des haut-parleurs du véhicule V.

Dans l'exemple non limitatif illustré sur la figure 2 par la courbe C1, après l'instant Tₛ la vitesse réelle du véhicule V continue de diminuer du fait de l'absence de couple, jusqu'à ce qu'elle devienne égale à Vmin à l'instant tₐₜ. Par conséquent, à cet instant tₐₜ le dispositif de contrôle DC ré-autorise la transmission de couple aux roues. La vitesse du véhicule V croît alors de la vitesse minimale Vmin jusqu'à la vitesse sensiblement constante V2 qu'il possédait initialement, par exemple grâce au contrôle réalisé par la fonction de régulation activée du système de contrôle de vitesse SC.

On notera que dans l'étape (ii), lorsque survient une accélération du véhicule V pendant l'arrêt de transmission de couple, après la durée seuil Tₛ et avant qu'il n'atteigne la vitesse minimale Vmin, on peut autoriser immédiatement la transmission de couple, afin que le véhicule V puisse regagner la vitesse sensiblement constante V2 qu'il possédait initialement. Une telle situation est illustrée non limitativement par la seconde courbe C2 de la figure 2. En effet, à l'instant t_{R}, postérieur à Tₛ, alors que la vitesse en cours du véhicule V est supérieure à la vitesse minimale Vmin, le véhicule V ré-accélère de façon par rapport à l'estimation de l'étape (i). Par conséquent, lorsque le dispositif de contrôle DC s'en aperçoit à l'instant t'ₐₜ il ré-autorise la transmission de couple aux roues. La vitesse du véhicule V croît alors de la valeur possédée à l'instant t'ₐₜ jusqu'à la vitesse sensiblement constante V2 qu'il possédait initialement, par exemple grâce au contrôle réalisé par la fonction de régulation activée du système de contrôle de vitesse SC.

Dans la situation qui précède, la fermeture de la chaîne de transmission permet d'éviter de se trouver dans une situation d'accélération naturelle du véhicule V en chaîne de transmission ouverte dans laquelle on injecte du carburant inutilement pour maintenir le régime de ralenti alors qu'il est plus intéressant d'être en frein moteur.

Par ailleurs, la situation qui précède ne concerne pas le cas où l'accélération se produit pendant une phase de roue libre alors que le moteur est coupé. En effet dans ce dernier cas (moteur coupé), tant que le véhicule V ne rentre pas dans une zone où la pente est suffisante pour entraîner le véhicule moteur tournant et chaîne de transmission fermée, on ne redémarre pas le moteur MT et on ne ferme pas la chaîne de transmission.

On notera également que dans la situation qui précède, du fait de la ré-accélération, il peut arriver que la vitesse du véhicule V atteigne rapidement la vitesse sensiblement constante V2 en roue libre. Dans ce cas, lorsque cette dernière vitesse (V2) est atteinte, on redémarre le moteur (s'il était coupé (mode sailing), puis on referme la chaîne de transmission et on maintient éventuellement le véhicule V à cette vitesse sensiblement constante V2 si son système de contrôle de vitesse SC fonctionne en mode de régulation de vitesse.

Dans un mode de réalisation encore plus sophistiqué, on peut tenir compte de l'intervalle de valeurs auquel appartient la pente de la portion de voie de circulation empruntée par le véhicule V, lorsqu'il fait l'objet d'une ré-accélération pendant l'arrêt de transmission de couple, après la durée seuil Tₛ et avant d'atteindre la vitesse minimale Vmin. Dans ce cas, on (le dispositif de contrôle DC) peut maintenir l'arrêt de transmission de couple tant que la pente de la voie de circulation empruntée demeure comprise dans un premier intervalle de valeurs choisi dans lequel une première quantité de carburant Q1 devant être utilisée pour maintenir le moteur MT en soutien du ralenti est strictement inférieure à une seconde quantité de carburant Q2 devant alimenter le moteur MT pour maintenir la vitesse du véhicule V en cas de rétablissement de la transmission de couple.

Ce premier intervalle de valeurs de pente comporte des valeurs qui sont suffisantes pour entraîner naturellement le véhicule V en chaîne de transmission ouverte, mais insuffisantes pour entraîner le véhicule V en chaîne de transmission fermée. Par conséquent, en chaîne de transmission ouverte, il faudrait freiner pour tenir la vitesse, et il faudrait injecter une quantité de carburant Q1 pour maintenir le moteur MT en soutien de ralenti, alors qu'en chaîne de transmission fermée il faudrait injecter une quantité de carburant Q2 supérieure à Q1 pour maintenir la vitesse.

On notera que les bornes de ce premier intervalle de valeurs choisi peuvent dépendre de la vitesse du véhicule à l'instant t considéré (ici la vitesse sensiblement constante V2). A titre d'exemple non limitatif, lorsque la vitesse du véhicule à l'instant t considéré est égale à 90 km/h, les bornes de l'intervalle de valeurs choisi peuvent être sensiblement égales à 2,9 % et 3,5 %.

Lorsque la pente de la voie de circulation empruntée est comprise dans un autre (deuxième) intervalle de valeurs choisi dans lequel la première quantité de carburant Q1 précitée est strictement supérieure à la seconde quantité de carburant Q2 précitée, on (le dispositif de contrôle DC) peut autoriser immédiatement la transmission de couple, afin que le véhicule V puisse regagner la vitesse sensiblement constante qu'il possédait initialement.

Ce deuxième intervalle de valeurs de pente comporte des valeurs qui sont également suffisantes pour entraîner naturellement le véhicule V en chaîne de transmission ouverte et insuffisantes pour entraîner le véhicule V en chaîne de transmission fermée, mais pour lesquelles en chaîne de transmission ouverte il faudrait freiner pour tenir la vitesse du véhicule V et injecter une quantité de carburant Q1 pour maintenir le moteur MT en soutien de ralenti, et en chaîne de transmission fermée il faudrait injecter une quantité de carburant Q2 inférieure à Q1 pour maintenir la vitesse. La phrase qui précède n'est valable que pour le mode roue libre moteur tournant. Pour le mode roue libre moteur coupé, ce deuxième intervalle de pente n'existe pas.

On notera que les bornes de ce deuxième intervalle de valeurs choisi peuvent également dépendre de la vitesse du véhicule à l'instant t considéré (ici la vitesse sensiblement constante V2). A titre d'exemple non limitatif, lorsque la vitesse du véhicule à l'instant t considéré est égale à 90 km/h, les bornes de cet autre intervalle de valeurs choisi peuvent être sensiblement égales à 3,5 % et 3,9 %.

Lorsque la pente de la voie de circulation empruntée est comprise dans un troisième intervalle dont les valeurs sont inférieures à celles du premier intervalle, elle est insuffisante pour entraîner naturellement le véhicule V en chaîne de transmission ouverte. Par conséquent, pour tenir la vitesse du véhicule, il est nécessaire de fermer la chaîne de transmission et de générer un couple moteur en injectant du carburant dans le moteur MT.

De même, lorsque la pente de la voie de circulation empruntée est comprise dans un quatrième intervalle dont les valeurs sont supérieures à celles du deuxième intervalle, elle est suffisante pour entraîner naturellement le véhicule V en chaîne de transmission fermée sans consommer de carburant et il faudrait freiner pour tenir la vitesse du véhicule V. Cependant, en chaîne de transmission ouverte il faudrait encore plus freiner pour tenir la vitesse du véhicule V et donc on consommerait du carburant dans le moteur MT pour maintenir le régime de ralenti.

L'invention permet de contrôler la dynamique longitudinale d'un véhicule grâce à une optimisation dans certaines circonstances de pente des phases de décélération en roue libre suivie d'une accélération, de manière à réduire la consommation du véhicule à l'usage sans que cela ne constitue une gêne pour ses passagers.

## Revendications

1. Procédé de contrôle du couple transmis dans un véhicule (V), comprenant une première étape dans laquelle on estime, lorsque ledit véhicule (V) circule à une vitesse sensiblement constante, une évolution temporelle de sa vitesse en l'absence de couple transmis en fonction de données représentatives des pentes d'une voie de circulation que va emprunter ledit véhicule (V), puis on détermine si la vitesse estimée au bout d'une durée seuil sera supérieure à une vitesse minimale, strictement inférieure à ladite vitesse sensiblement constante, et une deuxième étape dans laquelle on déclenche l'arrêt de transmission de couple lorsque ladite vitesse estimée au bout d'une durée seuil est supérieure à ladite vitesse minimale, puis on autorise la transmission de couple lorsque la vitesse du véhicule (V), en l'absence de couple transmis, devient égale à ladite vitesse minimale, afin que ledit véhicule (V) puisse regagner ladite vitesse sensiblement constante, **caractérisé en ce que** dans la deuxième étape, en cas d'accélération dudit véhicule (V) pendant l'arrêt de transmission de couple, après ladite durée seuil et avant d'atteindre ladite vitesse minimale, on autorise immédiatement la transmission de couple, afin que ledit véhicule (V) puisse regagner ladite vitesse sensiblement constante.

2. Procédé de contrôle du couple transmis dans un véhicule (V), comprenant une première étape dans laquelle on estime, lorsque ledit véhicule (V) circule à une vitesse sensiblement constante, une évolution temporelle de sa vitesse en l'absence de couple transmis en fonction de données représentatives des pentes d'une voie de circulation que va emprunter ledit véhicule (V), puis on détermine si la vitesse estimée au bout d'une durée seuil sera supérieure à une vitesse minimale, strictement inférieure à ladite vitesse sensiblement constante, et une deuxième étape dans laquelle on déclenche l'arrêt de transmission de couple lorsque ladite vitesse estimée au bout d'une durée seuil est supérieure à ladite vitesse minimale, puis on autorise la transmission de couple lorsque la vitesse du véhicule (V), en l'absence de couple transmis, devient égale à ladite vitesse minimale, afin que ledit véhicule (V) puisse regagner ladite vitesse sensiblement constante, **caractérisé en ce que** dans la deuxième étape, en cas d'accélération dudit véhicule (V) pendant l'arrêt de transmission de couple, après ladite durée seuil et avant d'atteindre ladite vitesse minimale, on maintient ledit arrêt de transmission de couple tant que la pente de la voie de circulation empruntée demeure comprise dans un intervalle de valeurs choisi dans lequel une première quantité de carburant devant être utilisée pour maintenir un moteur dudit véhicule (V) en soutien d'un ralenti est strictement inférieure à une seconde quantité de carburant devant alimenter ledit moteur pour maintenir la vitesse dudit véhicule (V) en cas de rétablissement de la transmission de couple.

3. Procédé selon l'une des revendications 1 ou 2, **caractérisé en ce que** ladite durée seuil est fonction au moins de ladite vitesse sensiblement constante.

4. Procédé selon l'une des revendications 1 à 3, **caractérisé en ce que** ladite vitesse minimale est fonction au moins de ladite vitesse sensiblement constante.

5. Procédé selon l'une des revendications 1 à 4 , **caractérisé en ce que** dans la deuxième étape, en cas d'accélération dudit véhicule (V) pendant l'arrêt de transmission de couple, après ladite durée seuil et avant d'atteindre ladite vitesse minimale, on autorise immédiatement la transmission de couple, afin que ledit véhicule (V) puisse regagner ladite vitesse sensiblement constante, lorsque la pente de la voie de circulation empruntée est comprise dans un intervalle de valeurs choisi dans lequel une première quantité de carburant devant être utilisée pour maintenir un moteur dudit véhicule (V) en soutien d'un ralenti est strictement supérieure à une seconde quantité de carburant devant alimenter ledit moteur pour maintenir la vitesse dudit véhicule (V) en cas de rétablissement de la transmission de couple.

6. Procédé selon l'une des revendications 1 à 5, **caractérisé en ce que** ladite vitesse sensiblement constante est égale à une vitesse de consigne programmée par un usager dudit véhicule (V) dans un système de contrôle de vitesse (SC) à consigne de vitesse programmable que comprend ledit véhicule (V).

7. Procédé selon la revendication 6, **caractérisé en ce que** dans la deuxième étape , lorsque ladite vitesse de consigne programmée est une vitesse de limitation, on génère dans ledit véhicule (V), à destination dudit usager, au moins un message destiné à lui proposer de relâcher une pression exercée sur une pédale d'accélérateur, et on déclenche l'arrêt de transmission de couple si ledit usager à relâché ladite pression exercée sur la pédale d'accélérateur, puis lorsque la vitesse du véhicule (V) devient égale à ladite vitesse minimale on génère dans ledit véhicule (V), à destination dudit usager, au moins un autre message destiné à lui proposer d'augmenter la pression exercée sur ladite pédale d'accélérateur, et on autorise la transmission de couple afin que ledit véhicule (V) puisse regagner ladite vitesse sensiblement constante lorsque ledit usager a augmenté ladite pression exercée sur la pédale d'accélérateur.

## Patentansprüche

1. Verfahren zur Steuerung des in einem Fahrzeug (V) übertragenen Drehmoments, das einen ersten Schritt umfasst, bei dem, wenn das Fahrzeug (V) mit einer im Wesentlichen konstanten Geschwindigkeit fährt, eine zeitliche Entwicklung seiner Geschwindigkeit in Abwesenheit des übertragenen Drehmoments in Abhängigkeit von Daten geschätzt wird, die für die Steigungen einer Fahrbahn, die das Fahrzeug (V) benutzen wird, repräsentativ sind, dann wird bestimmt, ob die geschätzte Geschwindigkeit am Ende einer Schwellwertdauer größer als eine Mindestgeschwindigkeit sein wird, streng kleiner als die im Wesentlichen konstante Geschwindigkeit, und ein zweiter Schritt, in dem die Drehmomentübertragung gestoppt wird, wenn die geschätzte Geschwindigkeit am Ende einer Schwellwertdauer größer als die Mindestgeschwindigkeit ist dann die Drehmomentübertragung freigegeben wird, wenn die Geschwindigkeit des Fahrzeugs (V) in Abwesenheit des übertragenen Drehmoments gleich der Mindestgeschwindigkeit wird, so dass das Fahrzeug (V) die im Wesentlichen konstante Geschwindigkeit wiedererlangen kann, **dadurch gekennzeichnet, dass** in dem zweiten Schritt im Falle einer Beschleunigung des Fahrzeugs (V) während des Stopps der Drehmomentübertragung nach der Schwellenzeit und vor Erreichen der Mindestgeschwindigkeit die Drehmomentübertragung sofort freigegeben wird, so dass das Fahrzeug (V) die im Wesentlichen konstante Geschwindigkeit wiedererlangen kann.

2. Verfahren zur Steuerung des in einem Fahrzeug (V) übertragenen Drehmoments, das einen ersten Schritt umfasst, bei dem, wenn das Fahrzeug (V) mit einer im Wesentlichen konstanten Geschwindigkeit fährt, eine zeitliche Entwicklung seiner Geschwindigkeit in Abwesenheit des übertragenen Drehmoments in Abhängigkeit von Daten geschätzt wird, die für die Steigungen einer Fahrbahn repräsentativ sind, die das Fahrzeug (V) benutzen wird, dann bestimmt wird, ob die geschätzte Geschwindigkeit am Ende einer Schwellendauer größer als eine Mindestgeschwindigkeit sein wird, die streng kleiner als die im Wesentlichen konstante Geschwindigkeit ist, und einen zweiten Schritt, bei dem der Stopp der Drehmomentübertragung ausgelöst wird, wenn die geschätzte Geschwindigkeit am Ende einer Schwellendauer größer als die Mindestgeschwindigkeit ist, dann die Drehmomentübertragung zugelassen wird, wenn die Geschwindigkeit des Fahrzeugs (V) in Abwesenheit des übertragenen Drehmoments gleich der Mindestgeschwindigkeit wird, um die Übertragung des Drehmoments an den Fahrer zu verhindern, gleich der Mindestgeschwindigkeit wird, so daß das Fahrzeug (V) die im wesentlichen konstante Geschwindigkeit wiedererlangen kann, **dadurch gekennzeichnet, daß** im zweiten Schritt im Falle einer Beschleunigung des Fahrzeugs (V) während des Drehmomentübertragungsstopps nach der Schwellenzeit und vor Erreichen der Mindestgeschwindigkeit der Drehmomentübertragungsstopp so lange aufrechterhalten wird, wie die Neigung der befahrenen Fahrbahn innerhalb eines ausgewählten Wertebereichs bleibt, in dem eine erste Kraftstoffmenge, die verwendet werden muss, um einen Motor des Fahrzeugs (V) zur Unterstützung des Leerlaufs aufrechtzuerhalten, strikt geringer ist als eine zweite Kraftstoffmenge, die dem Motor zugeführt werden muss, um die Geschwindigkeit des Fahrzeugs (V) im Falle der Wiederherstellung der Drehmomentübertragung aufrechtzuerhalten

3. Verfahren nach einem der Ansprüche 1 oder 2, **dadurch gekennzeichnet, dass** die Schwellenzeit eine Funktion zumindest der im Wesentlichen konstanten Geschwindigkeit ist.

4. Verfahren nach einem der Ansprüche 1 bis 3, **dadurch gekennzeichnet, dass** die Mindestdrehzahl eine Funktion von zumindest der im Wesentlichen konstanten Drehzahl ist.

5. Verfahren nach einem der Ansprüche 1 bis 4, **dadurch gekennzeichnet, dass** im zweiten Schritt im Falle einer Beschleunigung des Fahrzeugs (V) während des Drehmomentübertragungsstopps nach der Schwellenzeit und vor Erreichen der Mindestgeschwindigkeit die Drehmomentübertragung sofort freigegeben wird, so dass das Fahrzeug (V) die im Wesentlichen konstante Geschwindigkeit wiedererlangen kann, wenn die Steigung der befahrenen Fahrbahn innerhalb eines ausgewählten Wertebereichs liegt, in dem eine erste Kraftstoffmenge, die zur Aufrechterhaltung eines Motors des Fahrzeugs (V) zur Unterstützung des Leerlaufs zu verwenden ist, strikt größer ist als eine zweite Kraftstoffmenge, die dem Motor zur Aufrechterhaltung der Geschwindigkeit des Fahrzeugs (V) im Falle der Wiederherstellung der Drehmomentübertragung zuzuführen ist.

6. Verfahren nach einem der Ansprüche 1 bis 5, **dadurch gekennzeichnet, dass** die im Wesentlichen konstante Geschwindigkeit gleich einer eingestellten Geschwindigkeit ist, die von einem Benutzer des Fahrzeugs (V) in einem programmierbaren Geschwindigkeitssollwert-Geschwindigkeitssteuerungssystem (SC) programmiert wurde, das das Fahrzeug (V) umfasst.

7. Verfahren nach Anspruch 6, **dadurch gekennzeichnet, dass** im zweiten Schritt, wenn die programmierte Sollgeschwindigkeit eine Grenzgeschwindigkeit ist, mindestens eine Meldung in dem Fahrzeug (V) für den Benutzer erzeugt wird, die dazu bestimmt ist, ihm vorzuschlagen, den Druck auf ein Gaspedal zu lösen, und die Drehmomentübertragung gestoppt wird, wenn der Benutzer den Druck auf das Gaspedal gelöst hat, dann, wenn die Geschwindigkeit des Fahrzeugs (V) gleich der Mindestgeschwindigkeit wird, mindestens eine weitere Nachricht in dem Fahrzeug (V) erzeugt wird, die an den Benutzer adressiert ist und dazu bestimmt ist, ihm vorzuschlagen, den auf das Gaspedal ausgeübten Druck zu erhöhen, und die Übertragung des Drehmoments freigegeben wird, damit das Fahrzeug (V) die im Wesentlichen konstante Geschwindigkeit wiedererlangen kann, wenn der Benutzer den auf das Gaspedal ausgeübten Druck erhöht hat.

## Claims

1. Method of controlling the torque transmitted in a vehicle (V), comprising a first step in which, when the said vehicle (V) is travelling at a substantially constant speed, a time evolution of its speed in the absence of transmitted torque is estimated as a function of data representative of the gradients of a roadway which the said vehicle (V) is going to use, then it is determined whether the estimated speed at the end of a threshold time will be greater than a minimum speed, strictly less than the said substantially constant speed, and a second step in which the torque transmission is stopped when the said estimated speed at the end of a threshold time is greater than the said minimum speed, then the torque transmission is enabled when the speed of the vehicle (V), in the absence of transmitted torque, becomes equal to said minimum speed, so that said vehicle (V) can regain said substantially constant speed, **characterised in that** in the second step, in the event of acceleration of said vehicle (V) during the torque transmission stop, after said threshold time and before reaching said minimum speed, the torque transmission is immediately enabled, so that said vehicle (V) can regain said substantially constant speed.

2. Method of controlling the torque transmitted in a vehicle (V), comprising a first step in which, when the said vehicle (V) is travelling at a substantially constant speed, a temporal evolution of its speed in the absence of transmitted torque is estimated as a function of data representative of the gradients of a roadway which the said vehicle (V) is going to use, then it is determined whether the estimated speed at the end of a threshold duration will be greater than a minimum speed, strictly less than the said substantially constant speed, and a second step in which the torque transmission stop is triggered when the said estimated speed at the end of a threshold duration is greater than the said minimum speed, then the torque transmission is authorised when the speed of the vehicle (V), in the absence of transmitted torque, becomes equal to the said minimum speed, in order to prevent the transmission of torque to the driver, becomes equal to said minimum speed, so that said vehicle (V) can regain said substantially constant speed, **characterised in that** in the second step, in the event of acceleration of said vehicle (V) during the torque transmission stoppage, after said threshold time and before reaching said minimum speed said torque transmission stop is maintained as long as the slope of the traveled roadway remains within a selected range of values in which a first amount of fuel to be used to maintain an engine of said vehicle (V) in support of an idle speed is strictly smaller than a second amount of fuel to be supplied to said engine to maintain the speed of said vehicle (V) in case of restoration of the torque transmission.

3. Method according to one of claims 1 or 2, **characterized in that** said threshold time is a function of at least said substantially constant speed.

4. A method according to any of claims 1 to 3, **characterized in that** said minimum speed is a function of at least said substantially constant speed.

5. Method according to one of claims 1 to 4, **characterised in that** in the second step, in case of acceleration of said vehicle (V) during the torque transmission stop, after said threshold time and before reaching said minimum speed, the torque transmission is immediately enabled, so that said vehicle (V) can regain said substantially constant speed, when the slope of the traveled roadway is within a selected range of values in which a first amount of fuel to be used to maintain an engine of said vehicle (V) in support of idling is strictly greater than a second amount of fuel to be supplied to said engine to maintain the speed of said vehicle (V) in case of re-establishment of the torque transmission.

6. A method according to any one of claims 1 to 5, **characterised in that** said substantially constant speed is equal to a set speed programmed by a user of said vehicle (V) in a programmable speed set point speed control system (SC) which said vehicle (V) comprises.

7. Method according to claim 6, **characterised in that**, in the second step, when the said programmed set speed is a limiting speed, at least one message is generated in the said vehicle (V) for the said user, intended to suggest that he release pressure on an accelerator pedal, and the torque transmission is stopped if the said user has released the said pressure on the accelerator pedal, then, when the speed of the vehicle (V) becomes equal to the said minimum speed, at least one other message is generated in the said vehicle (V), addressed to the said user, intended to propose to him that he increase the pressure exerted on the said accelerator pedal, and the transmission of torque is authorised so that the said vehicle (V) can regain the said substantially constant speed when the said user has increased the said pressure exerted on the accelerator pedal.
